# EUROPÄISCHE PATENTANMELDUNG

(11) **EP 2 369 704 A2**
(43) Veröffentlichungstag der Anmeldung: **28.09.2011**
(21) Anmeldenummer: 11153538.1
(22) Anmeldetag: 07.02.2011
(51) Int. Cl.: H02G 3/04, H02G 3/06

(54) **Abschluss- oder Zwischenstück für einen Leitungskanal, Leitungskanal und Aufbausystem für Leitungskanäle**

(30) Priorität: 24.03.2010 DE 102010013436
(71) Anmelder: OBO Bettermann GmbH & Co. KG, 58710 Menden (DE)
(72) Erfinder: Warkus, Kai, 51709, Marienheide (DE)
(74) Vertreter: Patentanwälte Ruff, Wilhelm, Beier, Dauster & Partner

(57) **Zusammenfassung**

Die Erfindung betrifft ein Abschluss- oder Zwischenstück für einen leitungskanal.

Erfindungsgemäß ist ein Basisteil und ein Adapterteil zur Montage an dem Basisteil vorgesehen, wobei das Basisteil und das Adapterteil im montierten Zustand an dem Leitungskanal angreifen, wobei das Basisteil und/oder das Adapterteil wenigstens zwei Raststellen aufweist und wobei die erste Raststelle einer ersten Position des Adapterteils am Basisteil und die zweite Raststelle einer zweiten, von der ersten Position verschiedenen Positionen des Adapterteils am Basisteil zugeordnet ist.

Verwendung z.B. als Abschluss- oder Zwischenstück für Brüstungskanäle.

## Beschreibung

Die Erfindung betrifft ein Abschluss- oder Zwischenstück für einen Leitungskanal, einen leitungskanal sowie ein Aufbausystem für Leitungskanäle.

Bekannte Leitungskanäle bestehen aus einem Metall- oder Kunststoffprofil, das mit einer in Längsrichtung durchgehenden Öffnung zum Einlegen von Kabeln versehen ist. Die Öffnung kann mit einem Deckel verschlossen werden und in die Öffnung können auch Instaliationsgeräte, wie Steckdosen, oder Kanaldosen eingesetzt werden, in die dann Installattonsgeräte eingebaut werden. An offenen Enden werden solche Leitungskanäle mit Abschlussstücken verschlossen. Wird ein Leitungskanal um eine Mauerecke geführt, beispielsweise als Leitungskanal, muss als Zwischenstück ein Eckstück eingesetzt werden. Leitungskanäle werden beispielsweise aus Stahlblechprofilen, Aluminiumprofilen oder Kunststoffprofilen hergestellt. Endstücke für Stahlblechkanäle können nicht auf Aluminium- oder Kunststoffkanälen verwendet werden, da die Wandstärke und auch die Abmessungen unterschiedlich sind. Auch für Leitungskanäle aus ein und demselben Material werden unterschiedliche Abschlussstücke und Zwischenstücke benötigt, je nachdem, wo die Öffnung des Leitungskanals angeordnet ist, also ob beispielsweise ein symmetrischer Leitungskanal oder ein asymmetrischer leitungskanal vorliegt. Die Bevorratung von Abschlussstücken und Zwischenstücken für unterschiedliche Leitungskanalgeometrien sowie für unterschiedliche Leitungskanalmaterialien verursacht herstellerseitig sowie auch für den Großhandel erheblichen Aufwand.

Mit der Erfindung soll ein universell einsetzbares Abschluss- oder Zwischenstück für einen Leitungskanal, ein Leitungskanal sowie ein Aufbausystem für Leitungskanäle bereitgestellt werden.

Erfindungsgemäß ist hierzu ein Abschluss- oder Zwischenstück für einen Leitungskanal vorgesehen, bei dem ein Basisteil und ein Adapterteil zur Montage an dem Basisteil vorgesehen sind, wobei das Basisteil und das Adapterteil im montierten Zustand an dem Leitungskanal angreifen, wobei das Basisteil und/oder das Adapterteil wenigstens zwei Raststellen aufweist und wobei die erste Raststelle einer ersten Position des Adapterteils am Basisteil und die zweite Raststelle einer zweiten, von der ersten Position verschiedenen Position des Adapterteils am Basisteil zugeordnet ist.

Durch Vorsehen eines Basisteils und eines Adapterteils wird die Möglichkeit geschaffen, das Abschluss- oder Zwischenstück für Leitungskanäle mit unterschiedlicher Form zu verwenden. Je nach Geometrie des verwendeten leitungskanals wird das Adapterteil hierzu in eine der wenigstens zwei Raststellen eingesetzt und kann dann an einer jeweils geeigneten Stelle des Leitungskanals angreifen. Beispielsweise sind zwei Raststellen nebeneinander vorgesehen und das Adapterteil ist dafür vorgesehen, an einer Rastrinne am Leitungskanal anzugreifen. Liegt nun bei einem ersten Leitungskanal die von den Rastrinnen berandete Öffnung symmetrisch zum Leitungskanal, so wird für diesen leitungskanal das Adapterteil in eine erste Raststelle eingesetzt. Ist bei einem zweiten Leitungskanal die Öffnung asymmetrisch angeordnet, so wird beispielsweise das Adapterteil in eine seitlich zu der ersten Raststelle versetzte zweite Raststelle eingesetzt, um dann wieder an den Rastrinnen anzugreifen, die die Öffnung des Leitungskanals seitlich beranden. Durch Vorsehen des Adapterteils und des Basisteils sowie wenigstens zwei Raststellen an dem Basisteil ist in überraschend einfacher Weise die Möglichkeit für eine universelle Verwendung nur eines Abschluss- oder Zwischenstücks für einen Leitungskanal bereitgestellt, Leitungskanäle aus unterschiedlichen Materialien und mit unterschiedlichen Geometrien können mit ein und demselben Abschluss- oder Zwischenstück abgeschlossen werden, wodurch nicht nur die Herstellung sondern vor allem auch die Lagerhaltung dieser Abschluss- oder Zwischenstücke erheblich vereinfacht wird.

In Weiterbildung der Erfindung greift das Adapterteil an einer Innenseite des Leitungskanals an.

An der im eingebauten Zustand nicht sichtbaren Innenseite des Leitungskanals können unabhängig von der Wandstärke des Leitungskanals wenigstens Abschnitte so ausgebildet werden, dass sie auch bei unterschiedlichen Leitungskanalwandstärken identisch positioniert sind. Indem das Adapterteil an der Innenseite des Leitungskanals angreift wird somit die Möglichkeit geschaffen, auch Leitungskanäle mit unterschiedlichen Wandstärken und aus unterschiedlichen Materialien in besonders einfacher Weise mit ein und demselben Abschlussstück oder Zwischenstück abschließen zu können.

In Weiterbildung der Erfindung greift das Adapterteil an einer nach innen gerichteten Unterseite einer Rinne im Leitungskanal an.

Beispielsweise kann das Adapterteil an der Unterseite einer Rinne zum Einsetzen eines Deckels angreifen. Solche Rinnen sind an Leitungskanälen als Berandung einer in Längsrichtung durchgehenden Öffnung vorgesehen und dienen zum Arretieren eines Deckels sowie gegebenenfalls auch zum Arretieren von in die Öffnung des Leitungskanals eingesetzten Kanaldosen oder Installatiotisgeräten.

In Weiterbildung der Erfindung weist das Adapterteil einen stufenartigen Abschnitt auf, und greift mit einem Teil dieses stufenartigen Abschnitts an der Innenseite des Leitungskanals an.

Die stufenartige Ausbildung des Abschnitts des Adapterteils, mit dem dieses an der Innenseite, des Leitungskanals angreift, schafft die Möglichkeit, den Leitungskanal selbst so ausbilden zu können, dass dieser unabhängig von seiner Wandstärke eine immer gleich positionierte Angreiffläche für das Adapterteil aufweist. Beispielsweise ist die Unterseite einer sich in den Innenraum des Leitungskanals erstreckenden Rinne für das Angreifen des Adapterteils vorgesehen. Die Basis dieser Rinne wird nun ebenfalls stufenförmig ausgebildet und einer der dem Innenraum des Leitungskanals zugewandten Abschnitte der stufenförmig ausgebildeten Basis der Rinne wird unabhängig von der Wandstärke des Leitungskanalmaterials immer im gleichen Abstand von der Oberseite des Leitungskanals angeordnet. An diesem Abschnitt der Rinne kann dann das Adapterteil vom Innenraum des Leitungskanals her angreifen. Der zweite Abschnitt der stufenartigen Ausbildung des Basisteils der Rinne wird so ausgebildet, dass der einer Umgebung, also der Außenseite des Leitungskanals zugewandte Abschnitt der Basis der Rinne unabhängig von der Wandstärke des Leitungskanals immer den gleichen Abstand zur Oberseite des Leitungskanals aufweist. In diesen Abschnitt der Rinne können dann beispielsweise ein Deckel und/oder Installationsgeräte und Gerätebecher eingesetzt werden. Da die stufenartige Ausbildung der Basis der Rinne im Leitungskanal abhängig von der Wandstärke des Leitungskanalmaterials unterschiedlich ausgebildet ist, schafft die stufenartige Ausbildung eines Abschnitts des Adapterteils den erforderlichen Raum, um das Adapterteil an Leitungskanälen aus unterschiedlichen Materialien und unterschiedlichen Wandstärken angreifen lassen zu können.

In Weiterbildung der Erfindung weist das Basisteil wenigstens eine Federzunge auf, die im montierten Zustand auf einer Innenseite des Leitungskanals auflegt.

Mittels einer solchen Federzunge kann ein Gegenhalt für das Basisteil geschaffen werden, um dann gemeinsam mit der oder den Federzungen und dem Adapterteil das Basisteil sicher am Leitungskanal zu befestigen. Das Vorsehen von Federzungen ermöglicht es, auch bei unterschiedlichen Wandstärken von Leitungskanälen einen sicheren Halt zu gewährleisten.

In Weiterbildung der Erfindung sind die Raststellen als Schwalbenschwanzverbindungen zwischen Adapterteil und Basisteil ausgebildet.

Durch Vorsehen von Schwatbenschwanzverbindungen ist ein sicherer Halt bei definierter Lage des Adapterteils am Basisteil möglich. Gleichzeitig kann das Adapterteil durch einfaches Einschieben in eine der Schwalbenschwanzverbindurigen befestigt werden. Die Schwalbenschwanzverbindungen können in ihrer Längsrichtung gesehen beispielsweise konisch ausgebildet sein, um eine definierte Position des Adapterteils am Basisteil sicherzustellen.

In Weiterbildung der Erfindung ist das Adapterteil als Halteklammer mit zwei federnden Schenkeln ausgebildet.

Auf diese Weise und insbesondere in Verbindung mit dem Vorsehen von Federzungen am Basisteil kann das Adapterteil auch für uriterschiedliche Wandstärken der Leitungskanäle problemlos verwendet werden. Das Vorsehen eines Adapterteils in Form einer Halteklammer mit zwei federnden Schenkeln bietet sich beispielsweise bei Eckstücken an, die dann mittels der Halteklammer an den Rastrinnen von Leitungskanälen befestigt werden.

In Weiterbildung der Erfindung weist die Halteklammer an jedem Schenkel einen Hinterschnitt auf, der im montierten Zustand an der einem Innenraum des Leitungskanals zugewandten Rückseite der Rastrinnen oder Raststellen angreift.

In Weiterbildung der Erfindung ist das Basisteil und/oder das Adapterteil im Bereich jeder der wenigstens zwei Raststellen mit einer symbolischen Darstellung eines Leitungskanalquerschnitts versehen.

Auf diese Weise ist eine einfache Zuordnung der Raststellen zu unterschiedlichen Leitungskanatquerschnitten möglich. Beispielsweise sind an den Raststellen schematische Querschnittsdarstellungen unterschiedlicher Leitungskanäle vorgesehen. Ein Benutzer kann dadurch ohne weiteres und sofort erkennen, wo er das Adapterteil an dem Basisteil befestigen muss, um einen Leitungskanal mit dem entsprechenden Querschnitt mit dem Abschluss- oder Zwischenstück abschließen zu können.

Das der Erfindung zugrundeliegende Problem wird auch durch einen Leitungskanal mit wenigstens einem erfindungsgemäßen Abschluss- oder Zwischenstück gelöst, bei dem der Leitungskanal an einer Vorderseite mit wenigstens einer in Längsrichtung des Leitungskanalstücks durchgehenden Öffnung versehen ist, die von zwei Rastrinnen oder Raststellen berandet ist, wobei das Adapterteil an wenigstens einer dem Innenraum des Leitungskanals zugewandten Fläche der Rastrinnen oder Raststellen angreift.

Eine Fläche auf der dem Innenraum des Leitungskanals zugewandten Seite der Rastrinnen oder Raststellen ist unabhängig von der Wandstärke des verwendeten Leitungskanalmaterials so ausgebildet, dass diese Fläche einen definierten Abstand zu einer Außenseite des Leitungskanals aufweist. Beispielsweise ist hierfür eine stufenartige Ausbildung einer Basis einer Rastrinne geeignet. Wenn diese dem Innenraum zugewandte Fläche unabhängig vom verwendeten Leitungskanalmaterial einen definierten Abstand zur Außenseite des Leitungskanals aufweist, so kann unabhängig vom verwendeten Leitungskanalmaterial das Adapterteil an dieser Fläche angreifen, so dass auch ein und dasselbe Basisteil und ein und dasselbe Adapterteil für Leitungskanäle aus unterschiedlichen Materialien und dann mit unterschiedlichen Wandstärken verwendet werden kann.

Gemäß der Erfindung ist auch ein Leitungskanal vorgesehen, der an einer Vorderseite mit wenigstens einer in Längsrichtung des Leitungskanals durchgehenden Öffnung versehen ist, die von zwei Rastrinnen oder Raststellen berandet ist, bei dem die Rastrinne oder Raststelle einen stufenartig ausgebildeten Bereich aufweist.

Die den stufenartigen Bereich bildenden Flächen liegen vorteilhafterweise parallel zur Oberseite bzw. Unterseite des Leitungskanals, so dass eine Fläche der ersten Stufe, die zur Außenseite des Leitungskanals hin gerichtet ist, einen definierten Abstand zu einer Oberseite bzw. Außenseite des Leitungskanals aufweist. Eine zweite Stufe wird so ausgebildet, dass eine dem Innenraum des Leitungskanals zugewandte Fläche dieser Stufe unabhängig von der Wandstärke des Leitungskanals einen definierten Abstand zu einer Oberseite bzw. einer Außenseite des Leitungskanals aufweist. An der zweiten, dem Innenraum zugewandten Fläche kann das Adapterteil angreifen. Die erste Fläche bzw. ein sich von der ersten Fläche aus zur Außenseite des Leitungskanals hin erstreckender Abschnitt der Raststelle oder Rastrinne kann zum Einsetzen eines Deckels, eines Gerätebechers oder von Installationsgeräten genutzt werden. Dadurch wird es möglich, Gerätebecher, Installationsgeräte und gegebenenfalls sogar Deckel für die Leitungskanäle universell für Leitungskanäle mit verschiedenen Wandstärken und aus unterschiedlichen Materialien verwenden zu können.

Das der Erfindung zugrundeliegende Problem wird auch durch ein Aufbausystem für Leitungskanäle mit wenigstens zwei Leitungskanälen gelöst, wobei die Leitungskanäle an einer Vorderseite mit wenigstens einer in Längsrichtung der Leitungskanäle durchgehenden Öffnung versehen sind, die von zwei Rastrinnen oder Raststellen berandet ist, bei dem die Rastrinne oder Raststelle unabhängig von einer Wandstärke des Leitungskanals einen ersten Abschnitt mit einer der Außenseite des Leitungskanals zugewandten Fläche mit einem definierten Abstand zur Außenseite des Leitungskanals aufweist und dass die Leitungskanäle an den Rastrinnen oder Raststellen oder in deren Bereich wenigstens einen zweiten Abschnitt mit einer dem Innenraum des Leitungskanals zugewandten Fläche aufweisen, die unabhängig von einer Wandstärke eine definierte Position relativ zu einer Außenseite des Leitungskanals aufweist.

Mit einem solchen Aufbausystem aus Leitungskanäle mit beispielsweise unterschiedlicher Wandstärke und aus unterschiedlichen Materialien kann der erste Abschnitt mit der ersten Fläche zum Einsetzen von Deckeln oder Gerätebechern verwendet werden und der zweite Abschnitt mit der zweiten Fläche kann für das Ansetzen eines Adapterteil eines Abschluss- oder Zwischenstücks verwendet werden. Ein solches Aufbausystem vereinfacht die Herstellung der Einzelteile und Komponenten erheblich, da für Leitungskanäle mit unterschiedlichen Wandstärken und aus unterschiedlichen Materialien ein und dieselben Gerätebecher und gegebenenfalls sogar dieselben Deckel verwendet werden können. Weiter können für Leitungskanäle mit unterschiedlicher Wandstärke und aus unterschiedlichen Materialien dieselben Abschluss- und Zwischenstücke mit jeweils einem Basisteil und einem Adapterteil verwendet werden.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen dargestellten Ausführungsformen können dabei in beliebiger Weise miteinander kombiniert werden, ohne den Rahmen der Erfindung zu überschreiten. In den Zeichnungen zeigen:
- Fig. 1: eine perspektivische, auseinandergezogene Darstellung eines erfindungsgemäßen Abschlussstücks gemäß einer ersten Ausführungsform,
- Fig. 2: das Abschlussstück der Fig. 1 im zusammengebauten Zustand,
- Fig. 3: eine Darstellung des Abschlussstücks der Fig. 1 im montierten Zustand an einem Leitungskanal,
- Fig. 4: eine Seitenansicht eines ersten Leitungskanals mit dem Abschlussstück der Fig. 1,
- Fig. 5: eine Seitenansicht eines zweiten Leitungskanals mit dem Abschlussstück der Fig. 1,
- Fig. 6: eine Seitenansicht eines dritten Leitungskanals mit dem Abschlussstück der Fig. 1,
- Fig. 7: eine Seitenansicht eines vierten Leitungskanals mit dem Abschlussstück der Fig. 1,
- Fig. 8: eine Seitenansicht eines fünften Leitungskanals mit dem Abschlussstück der Fig. 1,
- Fig. 9: eine perspektivische Darstellung eines erfindungsgemäßen Zwischenstücks gemäß einer zweiten Ausführungsform,
- Fig. 10: das Zwischenstück der Fig. 9 im montierten Zustand an zwei Leitungskanaiabschnitten,
- Fig. 11: eine Darstellung der zwei Leitungskanatabschnitte und des Zwischenstücks der Fig. 10 von hinten,
- Fig. 12: eine perspektivische Ansicht eines erfindungsgemäßen Zwischenstücks gemäß einer dritten Ausführungsform,
- Fig. 13: das Zwischenstück der Fig. 12 im montierten Zustand an zwei Leitungskanalabschnitten und
- Fig. 14: eine Darstellung der beiden Leitungskanalabschnitte und des Zwischenstücks der Fig. 13 von hinten.

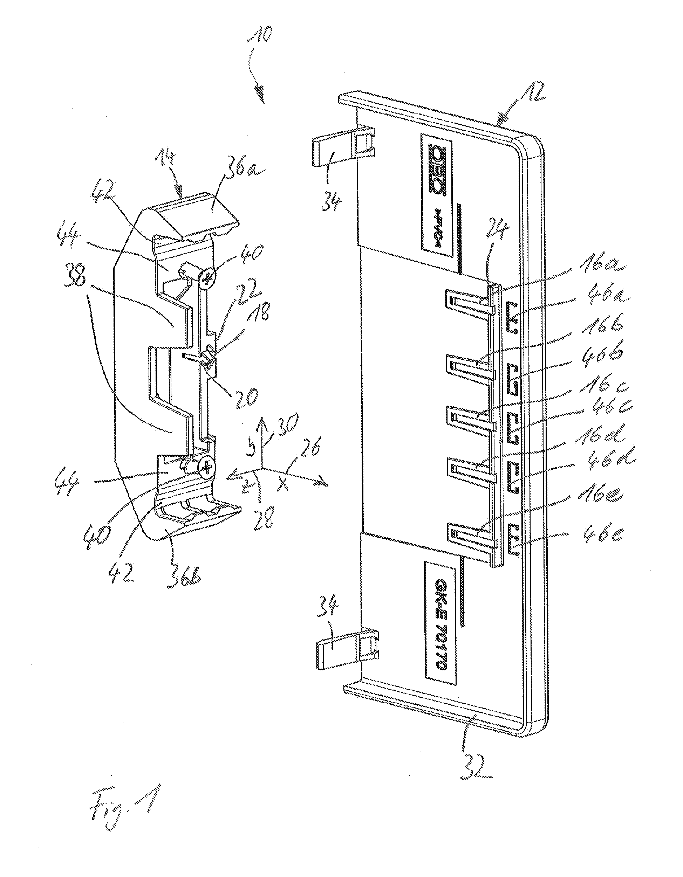

Die Darstellung der Fig. 1 zeigt ein erfindungsgemäßes Abschlussstück 10 gemäß einer ersten Ausführungsform. Das Abschlussstück 10 weist ein Basisteil 12 und ein Adapterteil 14 auf. Das Adapterteil 14 ist dafür vorgesehen, in eine von insgesamt fünf Raststellen 16a, 16b, 16c, 16d oder 16e eingeschoben und damit am Basisteil 12 verankert zu werden. Das Adapterteil 14 ist hierzu mit einer schwalbenschwanzförmigen Führung 18 versehen, die an die Raststellen 16a, 16b, 16c, 16d, 16e angepasst ist, die ebenfalls die Form von Schwalbenschwanzführungen aufweisen. Die Raststellen 16a bis 16e sind mit einer von dem Basisteil 12 abragenden schwalbenschwanzförmigen Führung versehen, wohingegen das Basisteil 14 mit einer schwalbenschwanzförmigen Aussparung versehen ist. Das Basisteil 14 wird gemäß einem an dem Basisteil 14 vorgesehenen Pfeil 20 auf die Führung einer der Raststellen 16a bis 16e aufgeschoben, bis eine in Fig. 1 sichtbare Vorderkante 22 der Schwalbenschwanzführung 18 an eine Anschlagkante 24 am Basisteil 12 anschlägt. Relativ zum Basisteil 12 kann das Adapterteil 14 damit in eine exakt definierte Position gebracht werden, wobei diese Position in X-Richtung 26 und in Z-Richtung 28 immer gleich ist und sich lediglich in Y-Richtung 30 zwischen den einzelnen Raststellen 16a bis 16e unterscheidet.

Das Basisteil 12 ist allgemein rechteckförmig ausgebildet und weist einen umtaufenden, kragenförmigen Rand 32 auf. Der kragenförmig Rand 32 ist dafür vorgesehen, außen auf der Außenseite eines Leitungskanals aufzuliegen oder in geringem Abstand von der Außenseite angeordnet zu werden. An der vierten Seite des plattenförmigen Basisteils 12 ist kein Kragen 32 angeordnet, es sind im Bereich dieser vierten Seite oder Rückseite aber zwei Federzungen 34 vorgesehen. Im montierten Zustand des Basisteils 12 sollen diese Federzungen 34 auf der Innenseite eines Leitungskanals aufliegen.

Das Adapterteil 14 weist eine halteklammerartige Form auf, wobei jeweils außen liegende Schenkel 36a, 36b dafür vorgesehen sind, Rastrinnen an einem Leitungskanal abschnittsweise zu umgreifen. Zwischen den beiden Schenkeln 36a, 36b sind zwei Stützvorsprünge 38 vorgesehen, die im montierten Zustand des Adapterteils 14 einen Deckel eines Leitungskanals von innen abstützen sollen. Im Abstand zu jedem der Schenkel 36a, 36b ist jeweils eine Halteschraube 40 vorgesehen. Zwischen einer jeweiligen Halteschraube 40 und dem zugeordneten Schenkel 36a, 36b kommt im montierten Zustand eine Rastrinne eines Leitungskanals zu liegen und das Adapterteil 14 wird mittels der Schrauben 40 zusätzlich am Leitungskanal gesichert.

Das Adapterteil 14 ist zwischen den Schenkeln 36a, 36b und der jeweils zugeordneten Schraube 40 stufenförmig ausgebildet, wobei eine erste Fläche 42 der Stufen gegenüber einem freien Ende des jeweiligen Schenkels 36a, 36b weiter entfernt ist als eine zweite Fläche 44, in der dann auch die Schraube 40 angeordnet ist.

Wie noch erläutert wird dient die zweite Fläche 44 als Anlagefläche an die Unterseite einer Rastrinne eines Leitungskanals, wohingegen die erste Fläche 42 Platz für die Anordnung von ebenfalls stufenförmig ausgebildeten Unterseiten von Rastrinnen von Leitungskanälen mit gegebenenfalls erhöhter Wandstärke schafft. Im montierten Zustand des Adapterteils 14 an dem Basisteil 12 ist die zweite Fläche 44 unabhängig von der Raststelle 16a bis 16e, in die das Adapterteil 14 eingeschoben ist, in X-Richtung 26 einem definierten Abstand zu einer Außenkante des Basisteils 12 und damit im montierten Zustand zu einer Außenseite des Leitungskanals 12 angeordnet.

Zwischen jeder der Raststellen 16a bis 16e und dem Kragen 32 ist eine schematische Darstellung 46a bis 46e unterschiedlicher Leitungskanalquerschnitte angeordnet. Diesen symbolischen Leitungskanalquerschnitten 46a bis 46e ist zu entnehmen, in welche der Raststellen 16a bis 16e das Adapterteil 14 eingeschoben werden muss, um an einem Leitungskanal mit einer jeweiligen Darstellung 46a bis 46e entsprechenden Querschnitt befestigt werden zu können.

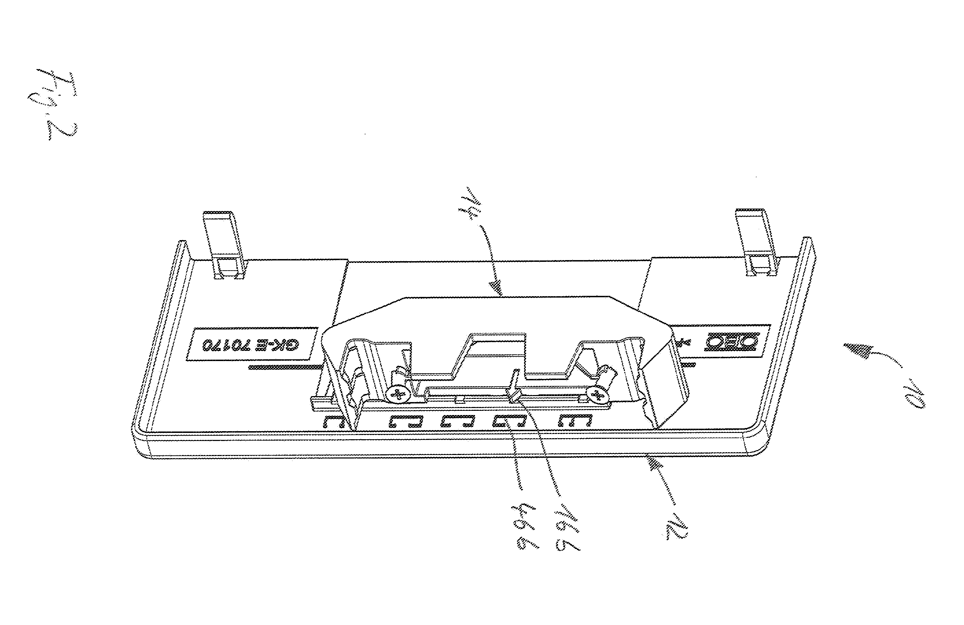

Fig. 2 zeigt das Adapterteil 14 im montierten Zustand an dem Basisteil 12, wobei das Adapterteil 14 in die Raststelle 16b eingeschoben ist und das Abschlussstück 10 damit an einem Leitungskanal mit einem Querschnitt befestigt werden kann, wie er in der schematischen Querschnittsdarstellung 46b gezeigt ist.

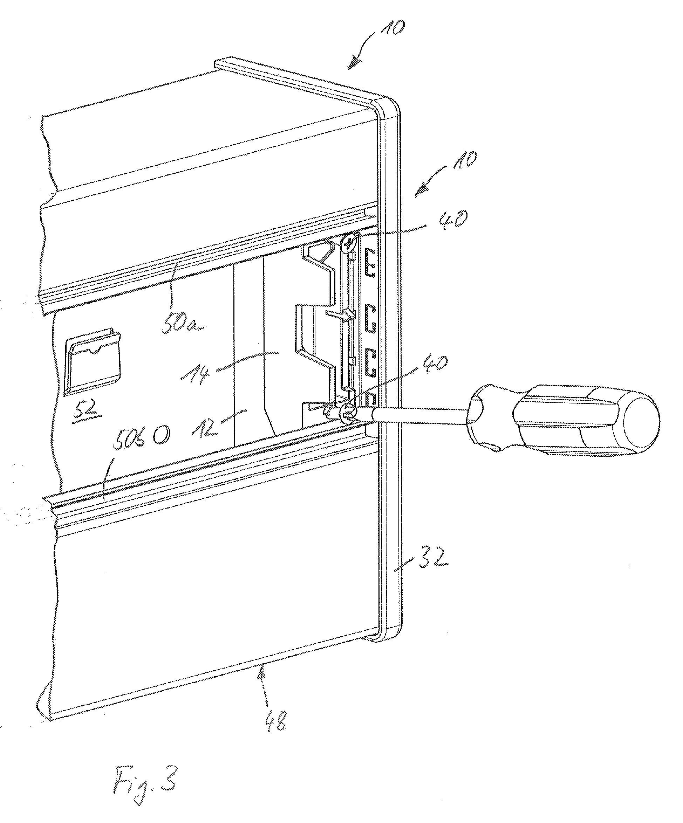

Fig. 3 zeigt das Abschlussstück 10 im montierten Zustand an einem Leitungskanal 48. Wie zu erkennen ist, greift das Adapterteil 14 von der Innenseite des Leitungskanals 48 her an den beiden Rastrinnen 50a, 50b an, die eine in Längsrichtung des Leitungskanals 48 durchgehende Öffnung begrenzen. Der Kragen 32 des Basisteils 12 liegt an drei Seiten außen auf dem Leitungskanal 48 auf oder ist in geringem Abstand zum Leitungskanal 48 angeordnet und verdeckt dadurch eine Stirnkante des Leitungskanals 48. Das Basisteil 14 liegt an einer dem Innenraum des Leitungskanals 48 zugewandten Innenseite der Rastrinnen 50a, 50b an und sichert dadurch das Abschlussstück am Leitungskanal 48. Zusätzlich liegen die in Fig. 3 nicht erkennbaren Federzungen 34, siehe Fig. 1, des Basisteils 12 auf einem Boden 52 des Leitungskanal 48 auf. Eine Innenseite des Kragens 32 muss nicht notwendiger Weise auf einer Außenseite des Leitungskanals 48 aufliegen, beispielsweise dann, wenn der Leitungskanal 48 dafür vorgesehen ist, mit unterschiedlichen Beschichtungen versehen zu werden. Das Abschlussstück 10 wird mittels der Anlage des Adapterteils 14 auf der dem Innenraum zugewandten Unterseite der Rastrinnen 50a, 50b sowie durch die Federzungen 34 am Leitungskanal 48 gehalten.

Um den Halt des Abschlussstücks 10 am Leitungskanal 48 weiter zu verbessern, werden die Schrauben 40 mittels eines in Fig. 3 gezeigten Schraubendrehers so weit in das Basisteils 14 eingedreht, bis die Schraubenköpfe an einer Oberkante der Rastrinnen 50a, 50b anliegen. Dadurch wird das Adapterteil 14 gegen die Unterseite der Rastrinnen 50a, 50b gezogen und gleichzeitig wird das Abschlussstück 10 zuverlässig am Leitungskanal 48 fixiert. Beispielsweise beim Abwischen des Leitungskanals 48 ist es dann nicht möglich, das Abschlussstück 10 versehentlich vom Ende des Leitungskanals 48 abzuziehen.

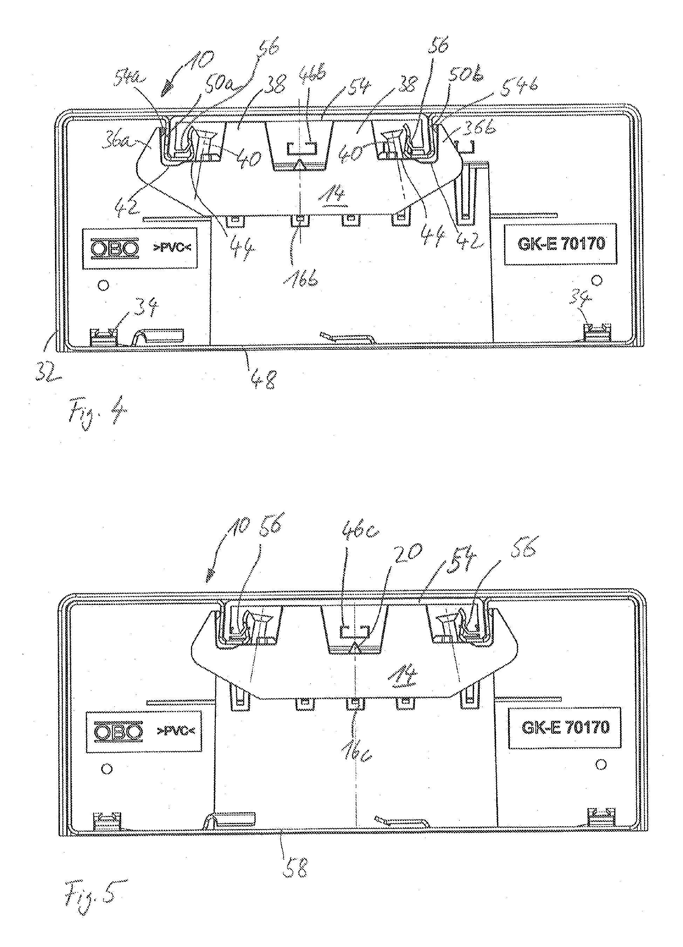

Die Darstellung der Fig. 4 zeigt eine Vorderansicht des Leitungskanals 48, wobei der Leitungskanal 48 auf der dem Betrachter zugewandten Seite einseitig offen und auf der anderen Seite mit dem Abschlussstück 10 versehen ist. Der Leitungskanal 48 ist als asymmetrischer Stahlblechkanal ausgebildet und die in Längsrichtung des Leitungskanals 48 durchgehende Öffnung ist, wie ohne weiteres in Fig. 4 zu erkennen ist, gegenüber der Mitte des Leitungskanals 48 nach links versetzt. Die Öffnung des Leitungskanals 48 ist mittels eines Deckels 54 verschlossen, der in die Rastrinnen 50a, 50b eingesetzt ist. Um diesen Deckel 54 von der Innenseite des Leitungskanals her abzustützen, sind die beiden Vorsprünge 38 am Adapterteil 14 vorgesehen, die an einer Innenseite des Deckels 54 anliegen. Anhand der Fig. 4 ist zu erkennen, dass das Adapterteil 14 auf einer dem Innenraum des Leitungskanals 48 zugewandten Unterseite der Rastrinnen 50a, 50b anliegt. Das Adapterteil 14 liegt dabei aber lediglich mit den Flächen 44 an der Unterseite der Rastrinnen 50a, 50b an. Zwischen den Flächen 44 und den Schenkeln 36a, 36b des Adapterteils 14 sind die gegenüber den Flächen 44 zurückversetzten Flächen 42 vorgesehen.

Im Falle des Leitungskanals 48 aus Stahlblech, der ja eine vergleichsweise geringe Wandstärke aufweist, liegt dadurch ein Abstand zwischen der Unterseite der Rastrinnen 50a, 50b und den Flächen 42. Bei einem Leitungskanal mit größerer Wandstärke, beispielsweise aus Kunststoff, wird dieser Abstand benötigt, um die erhöhte Wandstärke im Bereich der Rastrinnen unterbringen zu können, wie nachfolgend noch erläutert wird.

Fig. 4 ist weiter zu entnehmen, dass das Adapterteil in die Raststelle 16b eingeschoben ist, oberhalb derer die schematische Darstellung 46b des Querschnitts des Leitungskanals 48 zu finden ist.

Die Schenkel 36a, 36b sind auf ihren Innenseiten, die dem jeweils gegenüberliegenden Schenkel 36a, 36b zugewandt sind, im Bereich ihres freien Endes mit Vorsprüngen 54a, 54b versehen, die auf der jeweiligen Rückseite der Rastrinnen 50a, 50b anliegen, wobei diese Rückseiten dem Innenraum des Leitungskanals 48 und einer jeweiligen Seitenwand des Leitungskanals 48 zugewandt sind. Mittels der Vorsprünge 54a wird das Adapterteil 14 und damit das Abschlussstück 10 insgesamt gegen seitliche Verschiebung am Leitungskanal 48 gesichert.

In Fig. 4 ist weiter zu erkennen, dass die Federzungen 34 an dem Basisteil 12 auf einer Innenseite eines Bodens des Leitungskanals 48 aufliegen. Die Federzungen 34 spannen das Abschlussstück 10 und speziell das Basisteil 12 in einer Richtung nach oben, in Fig. 4 also in Richtung auf die Öffnung des Leitungskanals 48 zu, vor. Gegen eine Bewegung des Basisteils 12 in dieser Richtung sichert das Adapterteil 14, indem es auf der Unterseite der Rastrinnen 50a, 50b anliegt.

Anhand der Fig. 4 ist weiter zu erkennen, dass die Schrauben 40 gegenüber der dargestellten Position noch weiter eingedreht werden müssten, um an den der Öffnung im Leitungskanal 48 zugewandten Seitenflächen der Rastrinnen 50a, 50b anzuliegen und dadurch das Adapterteil 14 gegen die Unterseite der Rastrinnen 50a, 50b vorzuspannen und dadurch das gesamte Abschlussstück 10 zusätzlich am Leitungskanal 48 zu sichern.

Anhand der Fig. 4 ist weiter zu erkennen, dass eine Außenseite des Leitungskanals 48 und eine Innenseite des Kragens 32 am Basisteil 12 im Wesentlichen flächig aneinander anliegen. In der Ansicht der Fig. 4 ist die abgeschrägte Kante des Kragens 32 zu erkennen, auch im lackierten oder beschichteten Zustand liegt die Innenseite des Kragens 32 aber im Wesentlichen flächig auf einer Außenseite des Leitungskanals 48 auf. Die Darstellung der Fig. 5 zeigt eine Vorderansicht eines Leitungskanals 58, der als symmetrischer Stahlblechkanal ausgebildet ist. Die Wandstärke des Leitungskanals 58 der Fig. 5 entspricht der Wandstärke des Leitungskanals 48 der Fig. 4, der als asymmetrischer Kanal ausgebildet war. Das Abschlussstück 10 ist prinzipiell in gleicher Weise am Leitungskanal 58 wie am Leitungskanal 48 befestigt, lediglich das Adapterteil 14 ist in die Raststelle 16c anstelle in die Raststelle 16b, wie in Fig. 4 dargestellt ist, eingeschoben. Der am Adapterteil vorgesehene Pfeil 20 zeigt infolgedessen auf die schematische Darstellung 46c des Leitungskanals 58 mit symmetrischem Querschnitt.

Der Deckel 54 weist allgemein eine U-Form auf und ist mit seinen Schenkeln in die Rastrinnen 50a bzw. 50b eingesetzt. Gegen Abziehen aus den Rastrinnen 50a, 50b dient eine an jedem der beiden Schenkel des Deckels 54 angebrachte Federzunge 56, die in passende Ausnehmungen in den jeweils innen liegenden Schenkeln der Rastrinnen 50a, 50b eingreifen. Der Deckel 54 ist als Kunststoffextrusionsteil ausgebildet, so dass die Federzungen 56 einstückig an den Deckel 54 angeformt sind.

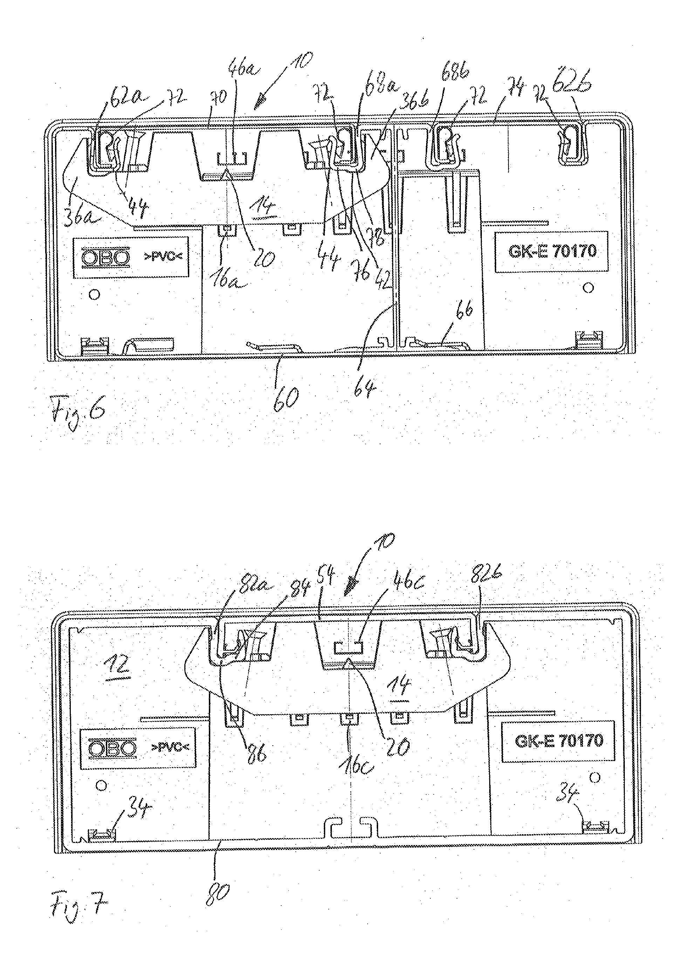

Die Darstellung der Fig. 6 zeigt eine Vorderansicht eines Leitungskanals 60, der als Stahlbleich-Doppelkanal ausgebildet ist. Der Leitungskanal 60 weist zwei Rastrinnen 62a, 62b auf, die im vergleichsweise großen Abstand zueinander angeordnet sind. Zwischen den beiden Rastrinnen 62a, 62b ist eine Zwischenwand 64 montiert, die mit ihrem Fuß auf der Unterseite des Leitungskanals 60 aufsitzt und dort mit ihrem T-förmigen Fuß unter eine Federlasche 66 geschoben und dadurch am Leitungskanal 60 befestigt ist. Die Federlasche kann aus der Unterseite des Leitungskanals 60 herausgestanzt und gebogen sein. Die Zwischenwand 64 erstreckt sich bis zur Oberseite des Leitungskanals, wobei die Zwischenwand 64 ein ebenfalls annähernd T-förmiges Kopfstück aufweist, an dessen Seiten Rastrinnen 68a, 68b angeordnet sind. Die Zwischenwand 64 weist eine größere Wandstärke als der Leitungskanal 60 auf und ist beispielsweise als Aluminiumstrangpressprofil ausgeführt. Ein erster Stahlblechdeckel 70 ist einerseits in die Rastrinne 62a des Leitungskanals 60 und andererseits in die Rastrinne 68a der Zwischenwand 64 eingesetzt. Zur Sicherung und Kontaktierung des Deckels 70 dienen federnd angeordnete Rasthaken 72.

Ein zweiter Deckel 74 ist einerseits in die Rastrinne 68 b der Zwischenwand 64 und andererseits in die Rastrinne 62b des Leitungskanals 60 eingesetzt und in diesen Rastrinnen 68b, 62b mit Rastfedern 72 gesichert. Der Leitungskanal 60 kann dadurch zwei Kanalabschnitte mit unterschiedlicher Größe bereitstellen, beispielsweise den in der Darstellung der Fig. 6 linken Abschnitt für Energieleitungen und den in der Darstellung der Fig. 6 rechten Abschnitt für Datenleitungen.

Das Abschlussstück 10 ist im Wesentlichen gleich wie bei den zuvor erläuterten Ausführungsbeispielen am Leitungskanal 60 gesichert.

Wie in Fig. 6 zu erkennen ist, liegt der linke Schenkel 36a des Adapterteils 14 mit der Fläche 44 auf der Unterseite der Rastrinne 62a an und im Bereich des rechten Schenkels 36b liegt das Adapterteil 14 ebenfalls mit der Fläche 44 an der Unterseite der Rastrinne 68a der Zwischenwand 64 an. Da die Wandstärke der Rastrinne 68a der Zwischenwand 64 aber größer ist als die Wandstärke des Stahlblechs im Bereich der Rastrinne 62a, weist die Rastrinne 68a im Bereich ihrer Basis eine stufenförmige Ausgestaltung auf. Ein erster, in Fig. 6 höherliegender Abschnitt 76 ist so angeordnet, dass seine Unterseite auf gleicher Höhe mit der Unterseite der Rastrinne 62a angeordnet ist. Die Fläche 44 des Adapterteils 14 kann dadurch an diesem Abschnitt 76 der Rastrinnen 68a anliegen. In einem zweiten Abschnitt 78, der gegenüber dem Abschnitt 76 nach unten, in Richtung auf den Innenraum des Leitungskanals 60 versetzt ist, erstreckt sich die Rastrinne 68a in Richtung auf das Basisteil 14, wobei für eine solche Erstreckung genügend Raum dadurch geschaffen ist, dass die Fläche 42 des Adapterteils 14 gegenüber der Fläche 44 ebenfalls in Richtung auf den Innenraum des Leitungskanals 60 zurückversetzt ist. Eine Oberseite im Abschnitt 78 ist aber auf gleicher Höhe wie die Oberseite oder Innenseite der Rastrinne 62a angeordnet. Durch die stufenförmige Ausgestaltung der Rastrinne 68a kann dadurch deren erhöhte Wandstärke kompensiert werden und dennoch ist eine erste Fläche 76 bereitgestellt, die sich auf gleicher Höhe wie die Unterseite der Rastrinne 62a befindet und an der das Adapterteil 14 von unten her angreifen kann und weiter ist eine Fläche 78 auf der Oberseite der Rastrinne 68a auf gleicher Höhe wie die Oberseite der Rastrinne 62a angeordnet, so das genügend Platz für die Anordnung des Deckels 70 geschaffen ist.

Das Adapterteil 14 ist in die Raststelle 16a eingeschoben, und der Pfeil 20 am Adapterteil 14 zeigt infolgedessen auf die schematische Darstellung 46a des Querschnitts des Leitungskanals 60.

Die Darstellung der Fig. 7 zeigt das Abschlussstück 10 im montierten Zustand an einem Leitungskanal 80, der als symmetrischer Kunststoffkanal ausgebildet ist. Das Abschlussstück 10 ist am Leitungskanal 80 in gleicher Weise wie an den Leitungskanälen 48, 58 und 60 befestigt. Das Adapterteil 14 ist in die Raststelle 16c am Basisteil 12 eingeschoben, und der Pfeil 20 am Adapterteil 14 zeigt auf die Darstellung 46c eines symmetrischen Leitungskanals.

Im direkten Vergleich mit der Darstellung der Fig. 6 ist zu erkennen, dass die Federzungen 34 am Basisteil 12 weiter nach oben, in Richtung auf das Adapterteil 14 zu, ausgelenkt sind, um die erhöhte Wandstärke des Leitungskanals 80 gegenüber dem Stahlblechkanal 60 der Fig. 6 zu kompensieren.

Anhand der Darstellung der Fig. 7 ist auch zu erkennen, dass der Kunststoffkanal 80 mit zwei Rastrinnen 82a, 82b versehen ist, deren dem Innenraum des Leitungskanals 80 zugewandte Unterseite stufenförmig ausgebildet ist. Eine erste Stufe 84 ist so ausgebildet und angeordnet, dass ihre Unterseite an der gleichen Position relativ zu einer Außenseite des Leitungskanals 80 angeordnet ist, wie die Unterseite der Rastrinne 62a des Leitungskanals 60 aus Stahlblech bzw. der Rastrinne 50a des Leitungskanals 48 und der Rastrinne des Leitungskanals 58, die ja alle als Stahlblechkanäle ausgebildet sind. Das Adapterteil 14 kann somit zur Befestigung des Abschlussstücks 10 an dem Leitungskanal 80, der als symmetrischer Kunststoffkanal ausgebildet ist, in exakt der gleichen Position relativ zum Basisteil 12 angeordnet werden, wie bei der Befestigung an dem symmetrischen Leitungskanal 58, der als Stahlblechkanal ausgebildet ist. Die stufenförmige Ausbildung der Unterseite der Rastrinnen 82a, 82b wird dazu genutzt, die erhöhte Wandstärke des Leitungskanals 80 auch im Bereich der Rastrinne 82a, 82b zu kompensieren.

Die Rastrinne 82a weist im Bereich ihrer Unterseite einen zweiten Abschnitt 86 auf, der gegenüber dem ersten Abschnitt 84 in Richtung auf den Innenraum des Leitungskanals 80 zurückversetzt ist. Eine Oberseite des Abschnitts 86 befindet sich dadurch bezogen auf die Außenseite des Leitungskanal 80 an der gleichen Position wie die Oberseite der Rastrinnen der Leitungskanäle 48, 58 und 60, die jeweils als Stahlblechkanäle ausgebildet sind. Dadurch hat die Rastrinne 82a, 82b oberhalb des Abschnitts 86 die gleiche Tiefe wie die Rastrinnen der Leitungskanäle 48, 58, 60 aus Stahlblech. Infolgedessen kann der Deckel 54 problemlos in den Leitungskanal 80 eingesetzt werden und ist relativ zu einer Außenseite des Leitungskanals 80 gleich angeordnet wie bei seiner Verwendung im Zusammenhang mit dem Leitungskanal 48 aus Stahlblech, der in Fig. 4 dargestellt ist.

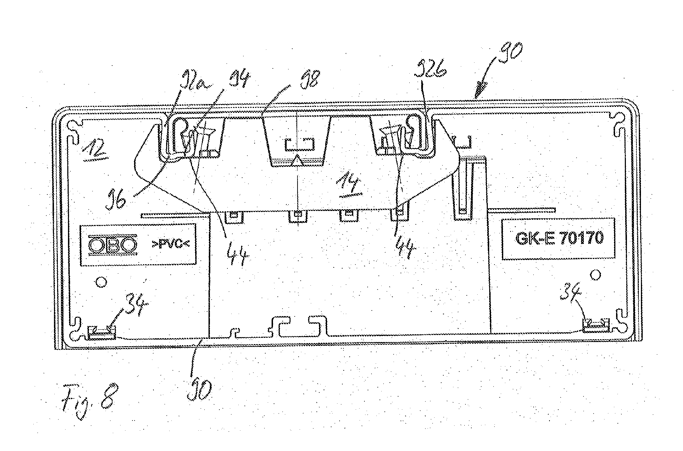

Die Darstellung der Fig. 8 zeigt einen Leitungskanal 90 gemäß einer weiteren Ausführungsform, der als asymmetrischer Aluminiumkanal ausgebildet ist. Die Wandstärke des Leitungskanals 90 ist geringer als die Wandstärke des Leitungskanals 80 aus Kunststoff, aber größer als die Wandstärke der Leitungskanäle 48, 58, 60 aus Stahlblech. Um diese gegenüber dem Stahlblechkanal erhöhte Wandstärke zu kompensieren, sind die Unterseiten der Rastrinnen 92a, 92b im Leitungskanal 90 wieder stufenförmig ausgebildet. Ein erster Abschnitt 94 der Rastrinnen 92a, 92b ist so angeordnet, dass sich seine Unterseite relativ zu einer Außenseite des Leitungskanals 90 an der gleichen Position befindet wie eine Unterseite des Abschnitts 84 beim Leitungskanal 80 in Fig. 7 und eine Unterseite der Rastrinne 50a beim Leitungskanal 48 gemäß Fig. 4 bzw. den Leitungskanälen 58, 60. Das Adapterteil 14 kann dadurch mit seinen Flächen 44 in gleicher Weise an der Unterseite der Rastrinnen 92a, 92b im Bereich der Abschnitte 94 angreifen und so das Abschlussstück 10 am Leitungskanal 90 sichern.

Ein zweiter Abschnitt 96 der Rastrinne 92a ist gegenüber dem ersten Abschnitt 94 zurückversetzt, so dass seine Oberseite relativ zur Außenseite des Leitungskanals 90 im gleichen Abstand zur Außenseite angeordnet ist wie bei dem Leitungskanal 80 aus Kunststoff und den Leitungskanälen 48, 58, 60 aus Stahlblech. In die Rastrinnen 92a, 92b kann dadurch entweder der Deckel 54 aus Kunststoff, der Deckel 70 aus Stahlblech, oder, wie dargestellt, ein Aluminiurrideckel 98 eingesetzt werden.

Die Federzungen 34 am Basisteil 12 liegen auf der Innenseite des Leitungskanals 90 an und stützen das Basisteil 12 dadurch am Leitungskanal 90 ab.

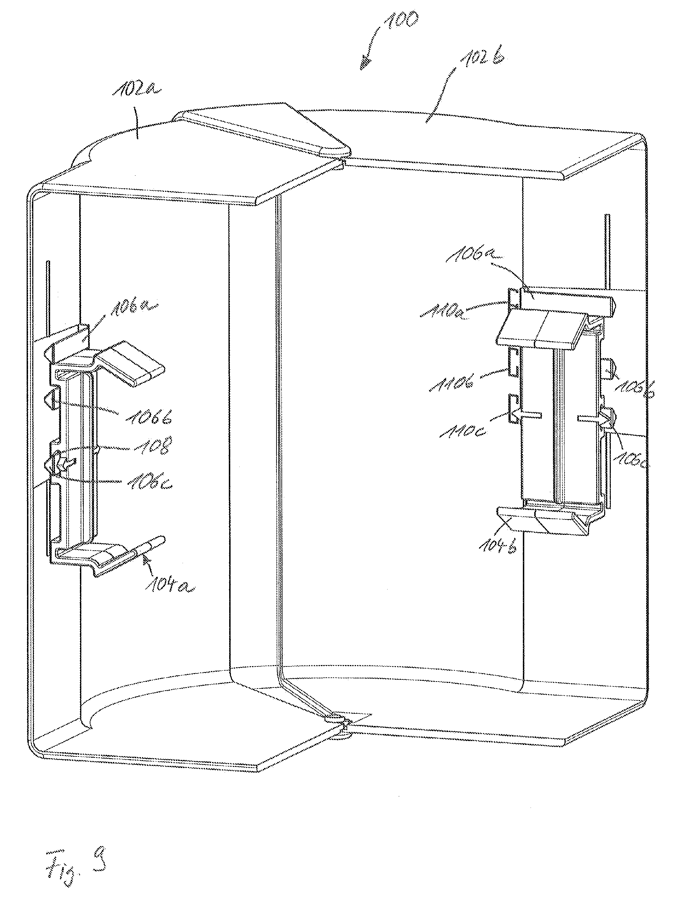

Die Darstellung der Fig. 9 zeigt ein Zwischenstück 100 gemäß einer weiteren Ausführungsform der Erfindung. Das Zwischenstück 100 ist als Außeneckstück zur Verbindung zweier Leitungskanale vorgesehen und weist zwei Basisteile 102a, 102b auf, die gemeinsam ein Eckgelenk bilden, sowie zwei identische Adapterteile 104a, 104b, die jeweils als U-förmige Halteklammer mit elastisch federnd angeordneten Schenkeln ausgebildet sind. Die Basisteile 102a, 102b weisen jeweils drei Raststellen 106a, 106b, 106c, jeweils in Form von Schwalbenschwanzführungen, auf, wobei die Schwalbenschwanxsführungen durch im Querschnitt schwalbenschwanzartige Vorsprünge ausgebildet sind.

Die Adapterteile 104a, 104b weisen mittig ebenfalls jeweils eine Schwalbenschwanzführung 108 auf, die als im Querschnitt schwalbenschwanzförmige Ausnehmung ausgebildet ist. Um die Adapterteile 104a, 104b an den Basisteilen 102a, 102b zu befestigen, müssen die Adapterteile 104a, 104b mit ihren Schwalbenschwanzführungen 108 jeweils auf eine der Schwalbenschwanzführungen der Raststellen 106a, 106b oder 106c aufgeschoben werden. Wie im rechten Bereich der Darstellung der Fig. 9 zu erkennen ist, ist jede der Raststellen 106a, 106b, 106c mit einer schematischen Darstellung 110a, 110b bzw. 110c eines Leitungskanalquerschnitts versehen. Je nachdem, welchen Querschnitt der Leitungskanals aufweist, an dem das Zwischenstück 100 angesetzt werden muss, werden die Adapterteile 104a, 104b in die Raststelle 106a, 106b oder 106c eingeführt, die die zum Leitungskanalquerschnitt passende Darstellung 110a, 110b, 110c aufweist.

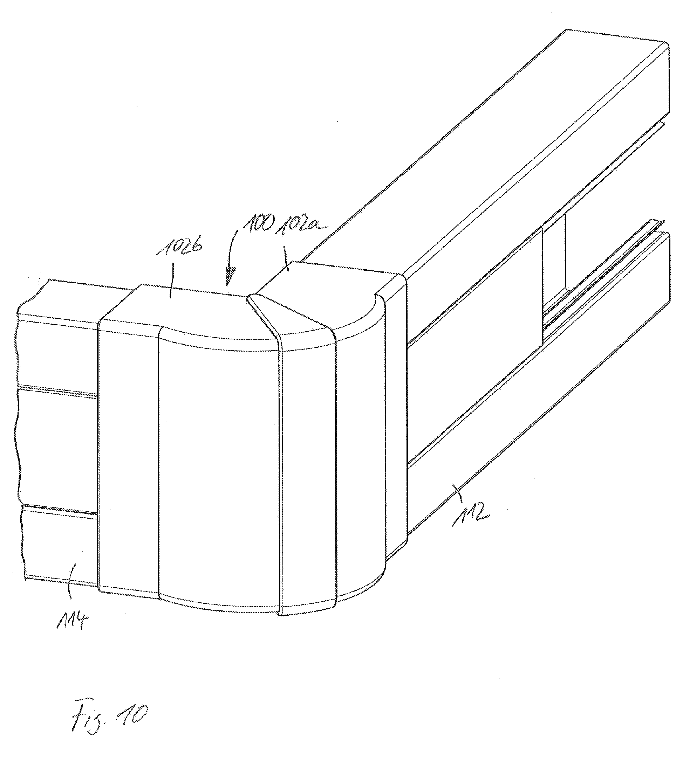

Die Darstellung der Fig. 10 zeigt das Zwischenstück 100 im montierten Zustand an zwei Leitungskanalabschnitten 112, 114. Das Zwischenstück 100 ist als sogenannte Außenecke konzipiert und kann die Leitungskanäle 112, 114 verbinden, wenn diese zwischen ihren, im montierten Zustand einer Gebäudewand zugewandten Rückseite einen Winkel von ± 90°, insbesondere einen Winkel zwischen 87° und 93° einschließen. Die Darstellung der Fig. 10 zeigt das Zwischenstück 100 von einer Vorderseite der Leitungskanäle 114, 112 her. Dargestellt ist ein Winkel zwischen den Leitungskanälen 112, 114 von 90°. Das Zwischenstück 100 weist aber zwei Basisteile 102a, 102b auf, wobei das Basisteil 102a mit einem Winkelstück versehen ist, um einen Zwischenraum zwischen diesen beiden Basisteilen 102a, 102b abzudecken. Aufgrund des an dem Basisteil 102a angeordneten Winkelstück kann das Zwischenstück 100 die Leitungskanäle 112, 114 auch dann verbinden, wenn diese in einem Winkel etwas mehr oder etwas weniger als 90° zueinander angeordnet sind.

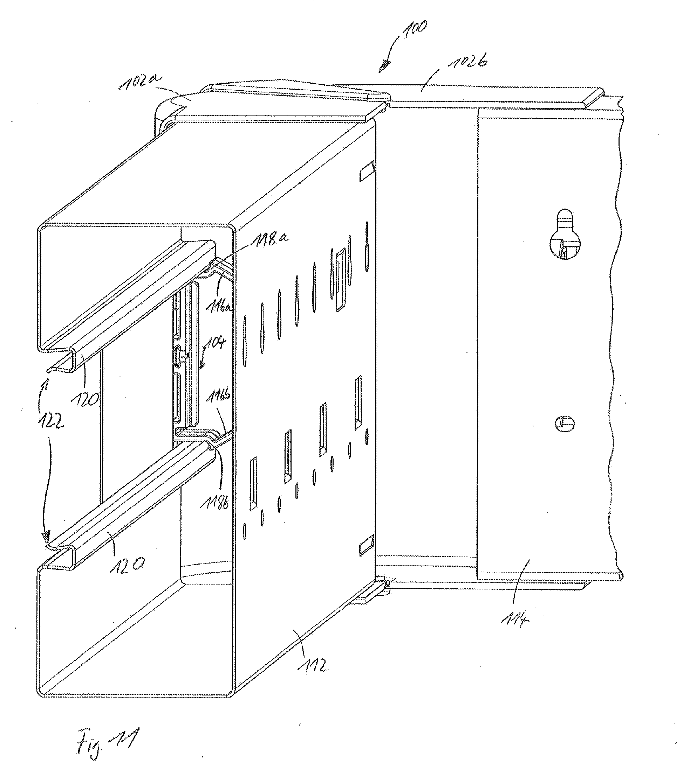

Anhand der Fig. 11 ist zu erkennen, dass das Adapterteil 104 zwei Schenkel 116a, 116b aufweist, die jeweils mit einem hakenförmigen Hinterschnitt 118a, 118b versehen sind. Diese hakenförmigen Hinterschnitt 118a, 118b der Adapterstücke 104 hintergreifen zum Innenraum der Leitungskanäle 112, 114 gewandte Unterseiten 120 von Rastrinnen 122 an den Leitungskanälen 112, 114. Ausgehend von den hakenartigen Hinterschnitten 118a, 118b sind die freien Enden der Schenkel 116a, 116b dann nach innen, aufeinander zulaufend ausgebildet. Dadurch sind zwei Anlaufschrägen ausgebildet, so dass das Adapterteil 104 einfach von der in Fig. 11 linken Seite her zwischen die Rastrinnen 122 geschoben werden kann. Durch die Anlaufschrägen werden sich die Schenkel 116a, 116b nach innen biegen. Das Adapterteil 104 kann weiter in Richtung auf den Leitungskanal 112 aufgeschoben werden, bis die Schenkel 116a, 116b wieder nach außen federn und die hakenartigen Hinterschnitte 118a, 118b die Unterseiten 120 der Rastrinnen 122 hintergreifen. In dieser, in Fig. 11 dargestellten Position des Adapterteils 104 ist das Zwischenstück 100 zuverlässig an den Leitungskanälen 112, 114 gesichert.

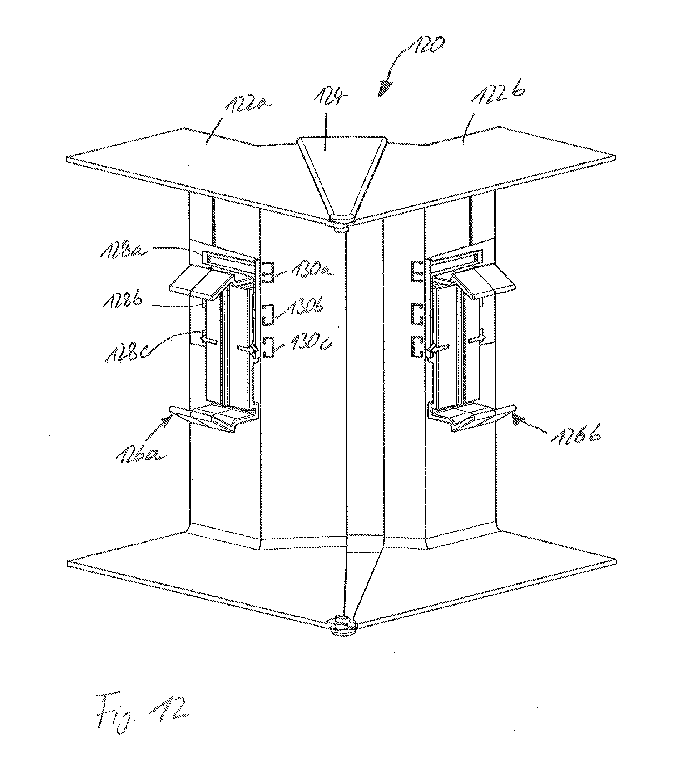

Die Darstellung der Fig. 12 zeigt ein Zwischenstück 120 gemäß einer weiteren Ausführungsform der Erfindung. Das Zwischenstück 120 ist als Eckstück für eine sogenannte einspringende Ecke vorgesehen, bei der die Vorderseiten von zu verbindenden Leitungskanälen, die in der Montageposition einer Gebäudewand abgewandt sind, in einem Winkel von etwa 90° zueinander angeordnet sind. Das Zwischenstück 120 weist ein erstes Basisteil 122a und ein zweites Basisteil 122b auf, wobei ein Zwischenraum zwischen diesen beiden Basisteilen 122a, 122b durch ein Winkelstück 124, das einstückig mit dem Basisteil 122a ausgebildet ist, überdeckt ist. Aufgrund des Winkelstücks 124 können mit dem Zwischenstück 120 auch Leitungskanäle miteinander verbunden werden, die einen Winkel von etwas mehr oder etwas weniger als 90°, insbesondere zwischen 87° und 93° zueinander aufweisen.

Jedes der Basisteile 122a, 122b ist mit drei Raststellen 128a, 128b, 128c in Form von schwalbenschwanzförmigen Führungen versehen, auf die jeweils ein Adapterstück 126a bzw. 126b aufgeschoben werden kann. Die Adapterstücke 126a, 126b sind gleich wie die Adapterstücke 104a, 104b in Fig. 9 ausgebildet. Jeder der Raststellen 128a, 128b, 128c ist eine schematische Darstellung 130a, 130b, 130c eines Querschnitts eines Leitungskanals zugeordnet. Je nachdem, welchen Querschnitt ein anzuschließender Leitungskanal hat, wird das Adapterstück 126a in diejenige Raststelle 128a, 128b, 128c eingeschoben, der eine entsprechende Darstellung 130a, 130b 130c eines Leitungskanatquerschnitts zugeordnet ist.

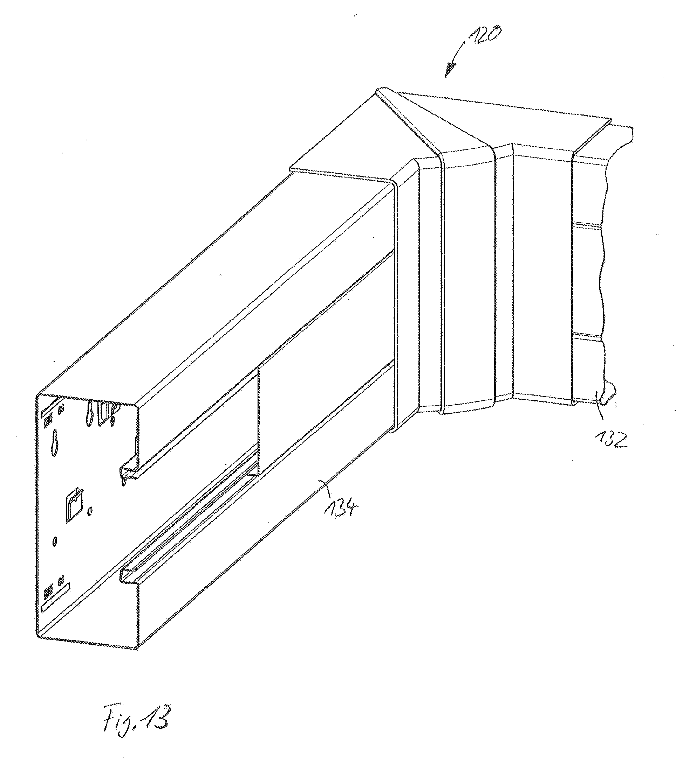

Die Darstellung der Fig. 13 zeigt die Leitungskanäle 134, 132 und das Zwischenstück 120 in einer Ansicht von vorne. Es ist gut zu erkennen, dass mit dem Zwischenstück 120 eine sogenannte einspringende Ecke überdeckt werden kann. Wie bei dem in Fig. 9 dargestellten Zwischenstück 100 ist bei dem Zwischenstück 120 besonders vorteilhaft, dass dieses für Leitungskanäle mit unterschiedlichem Querschnitt sowie auch mit unterschiedlichen Wandstärken verwendet werden kann.

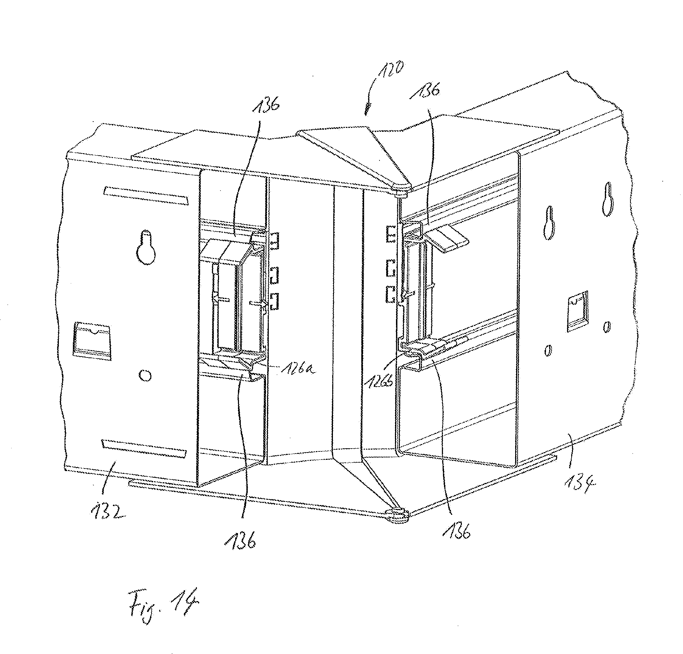

Die Darstellung der Fig. 14 zeigt das Zwischenstück 120 im montierten Zustand an zwei Leiturigskatialabschnitten 132, 134. Die Adapterstücke 126a, 126b hintergreifen in gleicher Weise wie die Adapterstücke 104a, 104b der Fig. 9 Rastrinnen 136 der Leitungskanäle 132, 134, so dass auf eine erneute Beschreibung verzichtet wird.

## Patentansprüche

1. Abschluss- oder Zwischenstück für einen Leitungskanal, **gekennzeichnet durch** ein Basisteil (12; 102a, 102b; 122a, 122b) und ein Adapterteil (14; 104a, 104b; 126a, 126b) zur Montage an dem Basisteil (12; 102a, 102b; 122a, 122b), wobei das Basisteil (12; 102a, 102b; 122a, 122b) und das Adapterteil (14; 104a, 104b; 126a, 126b) im montierten Zustand an dem Leitungskanal (48; 58; 60; 122, 124; 132, 134) angreifen, wobei das Basisteil (12; 102a, 102b; 122a, 122b) und/oder das Adapterteil (14; 104a, 104b; 126a, 126b) wenigstens zwei Raststellen (16a, 16b, 16c, 16d, 16e; 106a, 106b, 106c, 128a, 128b, 128c) aufweist und wobei die erste Raststelle (16a, 16b, 16c, 16d, 16e; 106a, 106b, 106c, 128a, 128b, 128c) einer ersten Position des Adapterteils (14; 104a, 104b; 126a, 126b) am Basisteil (12; 102a, 102b; 122a, 122b) und die zweite Raststelle (16a, 16b, 16c, 16d, 16e; 106a, 106b, 106c, 128a, 128b, 128c) einer zweiten, von der ersten Position verschiedenen Position des Adapterteils (14; 104a, 104b; 126a, 126b) am Basisteil (12; 102a, 102b; 122a, 122b) zugeordnet ist.

2. Abschluss- oder Zwischenstück nach Anspruch 1, **dadurch gekennzeichnet, dass** das Adapterteil (14; 104a, 104b; 126a, 126b) an einer Innenseite des Leitungskanals (48; 58; 60; 122, 124; 132, 134) angreift.

3. Abschluss- oder Zwischenstück nach Anspruch 2, **dadurch gekennzeichnet, dass** das Adapterteil (14; 104a, 104b; 126a, 126b) an einer nach innen gerichteten Unterseite einer Rinne im Leitungskanal (48; 58; 60; 122, 124; 132, 134) angreift.

4. Abschluss- oder Zwischenstück nach einem der vorstehenden Ansprüche, **dadurch gekennzeichnet, dass** das Adapterteil (14; 104a, 104b; 126a, 126b) wenigstens einen stufenartig ausgebildeten Abschnitt zum Angreifen an dem Leitungskanal (48; 58; 60; 122, 124; 132, 134) aufweist.

5. Abschluss- oder Zwischenstück nach einem der vorstehenden Ansprüche, **dadurch gekennzeichnet, dass** das Basisteil (12; 102a, 102b; 122a, 122b) wenigstens eine Federzunge (34) aufweist, die im montierten Zustand auf einer Innenseite des Leitungskanals (48; 58; 60; 122, 124; 132, 134)aufliegt.

6. Abschluss- oder Zwischenstück nach einem der vorstehenden Ansprüche, **dadurch gekennzeichnet, dass** die Raststellen (16a, 16b, 16c, 16d, 16e; 106a, 106b,106c,128a, 128b, 128c) als Schwalbenschwanzverbindungen zwischen Adapterteil (14; 104a, 104b; 126a, 126b) und Basisteil (12; 102a, 102b; 122a, 122b) ausgebildet sind.

7. Abschluss- oder Zwischenstück nach einem der vorstehenden Ansprüche, **dadurch gekennzeichnet, dass** das Adapterteil (104a, 104b; 126a, 126b) als Halteklammer mit zwei federnden Schenkeln (116a, 116b) ausgebildet ist.

8. Abschluss- oder Zwischenstück nach Anspruch 7, **dadurch gekennzeichnet, dass** die Halteklammer an jedem Schenkel (116a, 116b) einen Hinterschnitt (118a, 118b) aufweist, der im montierten Zustand an der einem Innenraum des Leitungskanals (112, 114; 132, 134) zugewandten Rückseite der Rastrinnen (122) oder Raststellen angreift.

9. Abschluss- oder Zwischenstück nach einem der vorstehenden Ansprüche, **dadurch gekennzeichnet, dass** das Basisteil (12; 102a, 102b; 122a, 122b) und/oder das Adapterteil (14; 104a, 104b; 126a, 126b) im Bereich jeder der wenigstens zwei Raststellen (16a, 16b, 16c, 16d, 16e; 106a, 106b, 106c, 128a, 128b, 128c) mit einer symbolischen Darstellung eines Leitungskanalquerschnitts versehen ist.

10. Leitungskanal mit wenigstens einem Abschluss- oder Zwischenstück nach einem der vorstehenden Ansprüche, **dadurch gekennzeichnet, dass** der Leitungskanal (48; 58; 60; 122, 124; 132, 134) an einer Vorderseite mit wenigstens einer in Längsrichtung des Leitungskanals (48; 58; 60; 122, 124; 132, 134) durchgehenden Öffnung versehen ist, die von zwei Rastrinnen (50a, 50b; 62a, 62b; 82a, 82b; 92a, 92b; 122) oder Raststellen berandet ist, wobei das Adapterteil (14; 104a, 104b; 126a, 126b) an wenigstens einer dem Innenraum des Leitungskanal (48; 58; 60; 122, 124; 132, 134) zugewandten Fläche der Rastrinnen (50a, 50b; 62a, 62b; 82a, 82b; 92a, 92b; 122) oder Raststellen angreift.

11. Leitungskanal, insbesondere nach Anspruch 10, wobei der Leitungskanal an einer Vorderseite mit wenigstens einer in Längsrichtung des Leitungskanals durchgehenden Öffnung versehen ist, die von zwei Rastrinnen oder Raststellen berandet ist, **dadurch gekennzeichnet, dass** die Rastrinne (68a, 68b; 82a, 82b; 92a, 92b) oder Raststelle einen stufenartig ausgebildeten Bereich aufweist.

12. Aufbausystem für Leitungskanäle mit wenigstens zwei Leitungskanälen, insbesondere nach Anspruch 11, wobei die Leitungskanäle (48; 58; 60; 122, 124; 132, 134) an einer Vorderseite mit wenigstens einer in Längsrichtung der Leitungskanäle (48; 58; 60; 122, 124; 132, 134) durchgehenden Öffnung versehen sind, die von zwei Rastrinnen (16a, 16b, 16c, 16d, 16e; 106a, 106b, 106c, 128a, 128b, 128c) oder Raststellen berandet ist, **dadurch gekennzeichnet, dass** die Rastrinne (16a, 16b, 16c, 16d, 16e; 106a, 106b, 106c, 128a, 128b, 128c) oder Raststelle unabhängig von einer Wandstärke des L.eitungskanals (48; 58; 60; 122, 124; 132, 134) einen ersten Abschnitt mit einer unteren Fläche aufweist, die einen definierten Abstand zu einer Oberseite des Leitungskanals (48; 58; 60; 122, 124; 132, 134) aufweist, und dass die Leitungskanäle (48; 58; 60; 122, 124; 132, 134) an den Rastrinnen (16a, 16b, 16c, 16d, 16e; 106a, 106b, 106c, 128a, 128b, 128c) oder Raststellen oder in deren Bereich wenigstens einen zweiten Abschnitt mit einer zweiten Fläche aufweisen, der unabhängig von einer Wandstärke eine definierte Position relativ zu einer Außenseite des Leitungskanals (48; 58; 60; 122, 124; 132, 134) aufweist.
